# EUROPEAN PATENT APPLICATION

(11) **EP 2 051 449 A1**
(43) Date of publication of application: **22.04.2009**
(21) Application number: 07764288.2
(22) Date of filing: 26.07.2007
(51) Int. Cl.: H04L 12/46, H04L 29/06, H04Q 7/38

(54) **A DEVICE AND METHOD FOR CARRYING OUT THE NODE ROAMING IN INTERNET PROTOCOL VERSION 6 NETWORK**

(30) Priority: 28.07.2006 CN 200610099554
(71) Applicant: Huawei Technologies Co., Ltd., Shenzhen, Guangdong Province 518129 (CN)
(72) Inventor: GUAN, Hongguang, Shenzhen, Guangdong 518129 (CN)
(74) Representative: Thun, Clemens
(86) International application number: PCT/CN2007/070367
(87) International publication number: WO 2008/014719

(57) **Abstract**

The present invention discloses an apparatus and method for a mobile node roaming in an Internet Protocol version 6 (IPv6) network. The apparatus includes a foreign home agent (FHA). The method includes: when a mobile node (MN) moves from an Internet Protocol version 4 (IPv4) network to an IPv6 network, an FHA exchanges messages with the MN and the IPv4 home agent (HAv4) of the MN to register tunnels at the IPv6 network interface and the IPv4 network interface. The method further includes: the MN sends a Binding Update (BU) message that carries an IPv4 registration option of the MN when the MN moves from the IPv4 network to the IPv6 network. With the present invention, the routing scheme for a dual-stack MN to roam from an IPv6 network to an IPv4 network is implemented.

## Description

### Field of the Invention

The present invention relates to network communication technologies, and in particular, to an apparatus and a method for a mobile node roaming in an Internet Protocol version 6 (IPv6) network.

### Background of the Invention

In the existing Transmission Control Protocol (TCP)/Internet Protocol (IP) framework, the IP address of a mobile node (MN) represents the location of the MN. When a communication node (CN) sends data packets to the MN, the route is determined according to the network indicated by the IP address of the MN. When the MN roams from its home network to a foreign network, the data packets sent by the CN to the MN will still be routed to the home network of the MN. But because the MN is not located in the home network at the time, the packets will be discarded in the home network of the MN and the communication between the CN and the MN will be interrupted.

With the development of mobile communication technologies, it is required that a future network should be IP-based and that, when the MN roams or roves to a foreign network, the ongoing communication should be held continuous without interruption. The traditional TCP/IP does not satisfy the above requirement of mobile communications. The Internet Engineering Task Force (IETF), therefore, has proposed Mobile IP version 4 (MIPv4) and Mobile IP version 6 (MIPv6).

MIPv4 and MIPv6 provide respective methods for an MN to communicate by means of its home IP address when the MN roams in an IPv4 or IPv6 network.

MIPv4 allows a MIPv4-enabled node to move in a MIPv4 network and hold an ongoing connection during a movement. The specific MIPv4 procedure is as follows:

Triangle routing is adopted. When an MN is on its home link, the MN follows the normal IPv4 procedure. When the MN moves from the home link to a foreign link, the MN must first obtain a care of address (CoA) on the foreign link and register the CoA with the home agent (HA).

A CN can see only the home address (HoA) of the MN and does not know that the MN has moved. This means, for the CN, the movement of the MN is transparent. The HoA is an address that is permanently assigned to the MN on the home link. Therefore, the CN will still send a packet destined to the MN directly to the HoA of the MN. When the packet is routed to the HA of the MN, the HA sends the packet to the CoA of the MN registered with the HA through a tunnel. Data sent by the MN to the CN is sent to the CN directly. In the above procedure, the MN must support MIPv4.

MIPv6 allows a MIPv6-enabled node to move and maintain the continuity of an ongoing communication during the movement. Like the above MIPv4 procedure, when the MN moves from the home network to a foreign network, the MN first obtains a CoA in the foreign network and registers the CoA with the HA via a Binding Update (BU) message. When the HA receives the BU message from the MN, the HA returns a Binding acknowledgement and generates a cache entry on the HA. In an IPv6 network, an MN may also adopt a route optimization method.

MIPv4 and MIPv6 have enabled the movement of an MN in their respective field. However, with the deployment of MIPv4 and MIPv6 solutions and the application of MIP, it is common that an MN will roam between the two types of networks. This results in another problem. If an MN moves from a MIPv4 network to a MIPv6 network or from a MIPv6 network to a MIPv4 network, how can the previous connectivity be maintained?

In a prior art, a method for implementing roaming of an MN between IPv6 and IPv4 networks is: the IETF proposes a dual-stack MIP (DSMIP) solution, which requires that both the HA of the MN and the MN support dual-stack and have both IPv4 and IPv6 addresses. The tunnel broker technology is applied in DSMIP to solve the roaming and traversal of an MN in an IPv4 network.

However, the inventor of the present invention finds that the method in the prior art is subject to the following weakness: the HA must have an IPv4 address and must support dual-stack, which will occupy the precious IPv4 address resources. The tunnel broker technology may introduce many entries to the IPv6 routing table so that the IPv6 routing table is over-large, which is contrary to the initial intent of IPv6 design.

### Summary of the Invention

The present invention intends to provide an apparatus and a method for a mobile node roaming in an IPv6 network so that a dual-stack mobile node can roam from an IPv4 network to an IPv6 network.

The purpose of embodiments of the invention is realized through the following technical scheme:

An apparatus for a mobile node roaming in an IPv6 network includes:

a foreign home agent (FHA), which has both an IPv6 address and an IPv4 address and registers a tunnel respectively in an IPv6 network interface and an IPv4 network interface when a mobile node (MN) moves from an IPv4 network to an IPv6 network.

A method for a mobile node roaming in an IPv6 network includes:

sending, by a mobile node (MN), a Binding Update (BU) message that carries an IPv4 registration option of the MN when the MN moves from an IPv4 network to an IPv6 network.

In the technical scheme provided by embodiments of the present invention, an FHA is set to establish tunnels between the FHA and the MN and between the FHA and the IPv4 home agent (HAv4) of the MN so that a dual-stack MN can roam from an IPv4 network to an IPv6 network. Compared with prior arts, this technical scheme has the following advantages:

The HA does not need to support dual-stack and the present invention only extends the current protocol with a few changes to the current protocol; and

Embodiments of the present invention are easy to implement, without introducing many entries to the IPv6 routing table and resulting in an over-large IPv6 routing table.

### Brief Description of the Drawings

Figure 1 is a schematic diagram showing the structure of an apparatus for a mobile node roaming in an IPv6 network according to an embodiment of the present invention;

Figure 2 shows a procedure for a mobile node roaming in an IPv6 network according to an embodiment of the present invention;

Figure 3 shows the format of the registration request extension option according to an embodiment of the present invention;

Figure 4 shows the format of the registration acknowledgement extension option according to an embodiment of the present invention;

Figure 5 shows a procedure where PEBU and PEBack, registration message and registration reply are exchanged according to an embodiment of the present invention;

Figure 6 shows the format of the binding update extension option according to an embodiment of the present invention;

Figure 7 shows the format of the binding acknowledgement extension option according to an embodiment of the present invention; and

Figure 8 shows a procedure where messages are exchanged between FHA and MN when the MN moves from an IPv6 network to an IPv4 network.

### Detailed Description of the Embodiments

Embodiments of the invention provide an apparatus and a method for a mobile node roaming in an IPv6 network. In embodiments of the invention, a foreign home agent (FHA) is placed at the boundary of an IPv6 network and an IPv4 network or in a hybrid network to establish tunnels between the FHA and a mobile node (MN) and between the FHA and the IPv4 home agent (HAv4) of the MN. When the MN roams from the IPv4 network to the IPv6 network, the MN communicates with an IPv4 communication node (CNv4) via the FHA.

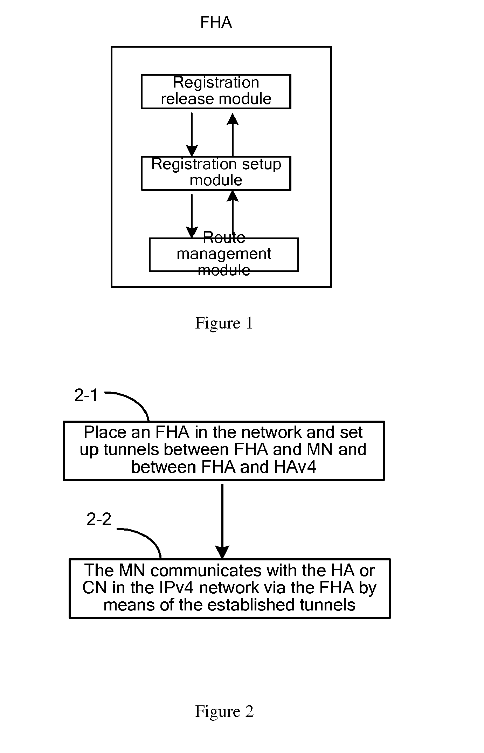

The following describes the present invention in detail with reference to the accompanying drawings. An apparatus for a mobile node roaming in an IPv6 network includes an FHA, with its structure shown in Figure 1.

The FHA supports MIP4 and MIP6 simultaneously, that is, supports dual-stack, and has both an IPv6 address and an IPv4 address. The FHA is placed at the boundary of an IPv6 network and an IPv4 network or in a hybrid network of IPv6 and IPv4. When an MN moves from an IPv4 network to an IPv6 network, tunnels are registered respectively at the IPv6 network interface and the IPv4 network interface. This means, a tunnel between FHA and MN is registered in the IPv6 network and a tunnel between FHA and HAv4 is registered in the IPv4 network. The FHA transfers data packets between the MN and the CNv4 via the two tunnels.

In response to the two tunnels, the FHA needs to generate and store two cache entries. One cache entry corresponds to (FHoAv6, CoA) in the IPv6 network. The other cache entry corresponds to (HAA, FHoAv4) in the IPv4 network. For the purpose of associating the two tunnels, the FHA also needs to generate and store a map (FHoAv4, FHoAv6). The FHoAv6 is the IPv6 foreign home address that the MN obtained from the FHA. The CoA is the care of address of the MN in the IPv6 network. The FHoAv4 is the IPv4 foreign home address that the MN obtained from the FHA. The HAA is the home agent address of the MN in the IPv4 network.

The FHA includes a registration setup module, a registration release module and a route management module.

The registration setup module is adapted to register a tunnel between FHA and MN at the IPv6 network interface and generate and store a corresponding cache entry (FHoAv6, CoA) when the MN moves from an IPv4 network to an IPv6 network; register a tunnel between FHA and HAv4 at the IPv4 network interface and generate and store a corresponding cache entry (HAA, FHoAv4); generate and store a map (FHoAv4, FHoAv6).

The registration release module is adapted to release the FHA-MN tunnel registered at the IPv6 network interface and delete the stored corresponding cache entry (FHoAv6, CoA) and the entry corresponding to the FHA in the map (FHoAv4, FHoAv6) when the MN returns from the IPv6 network to the IPv4 network.

The route management module is adapted to transfer data packets between MN and HAv4 via the FHA-MN tunnel and FHA-HAv4 tunnel registered by the registration setup module according to the map information stored by the registration setup module, when the MN moves from the IPv4 network to the IPv6 network.

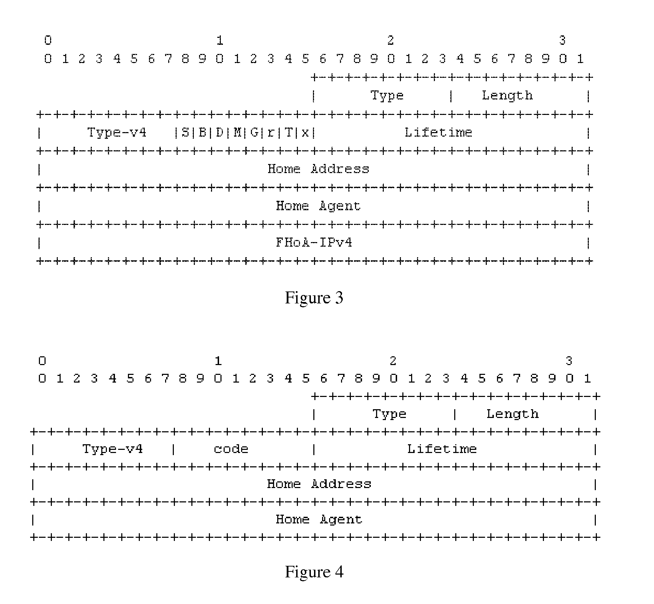

As shown in Figure 3, a procedure for a mobile node roaming in an IPv6 network according to an embodiment of the invention includes the following steps:

Step 2-1: Placing an FHA in the network and setting up tunnels between FHA and MN and between FHA and HAv4.

In an embodiment of the present invention, an FHA server needs to be placed at the boundary of an IPv6 network and an IPv4 network or in a hybrid network of IPv6 and IPv4. The FHA server supports MIPv4 and MIPv6 simultaneously and has both an IPv4 address and an IPv6 address.

When the MN roams from the IPv4 network to the IPv6 network, the MN obtains a CoA from an access router (AR) in the IPv6 network and sends a Proxy Extension Binding Update (PEBU) message to the FHoA_IPv6 interface of the FHA. Then a tunnel is set up between the MN and the FHAv6. The source address of the PEBU is the CoA obtained by the MN from the AR and the destination address is FHoAv6. The PEBU carries a registration request extension option and the lifetime value in the registration request extension option must be smaller than or equal to the lifetime value in the PEBU.

The format of the registration request extension option is shown in Figure 3. The following describes some parameters:

Type: to be determined (TBD);

Length: 16;

FHoA-IPv4: address of the FHA in the IPv4 network;

Type-v4: corresponding to the type in the registration message (refer to RFC [3344]);

Other parameters: reference can be made to RFC [3344].

When the FHA receives the PEBU message, the FHA generates a registration message according to the binding update extension option in the PEBU message. The source address of the registration message is FHoAv4 and the destination address is HAA. Meanwhile, the FHA must also generate and store a cache entry (FHoAv6, CoA). Then, the FHA sends the registration message from the IPv4 network interface of the FHA to the HAv4. Then, a tunnel is set up between the HAv4 and the FHAv4. Likewise, the lifetime value in the binding update extension option of the registration message must be smaller than or equal to the lifetime value in the registration message. Afterwards, the FHA must generate and store a map (FHoAv4, FHoAv6) and another cache entry (HAA, FHoAv4).

When the HAv4 receives the registration message sent by the FHA, the HAv4 must generate and store a cache entry (HoA, FHoAv4), or else the HAv4 needs to update the registration cycle according to the registration message and then send a registration reply to the IPv4 network interface of the FHA.

Upon reception of the registration reply, the FHA sends a Proxy Extension Binding Acknowledgement (PEBack) message on the IPv6 interface of the FHA to the MN. The source address of the PEBack is FHoAv6 and the destination address is the CoA obtained by the MN from the AR. The PEBack must carry a registration acknowledgement extension option, which is obtained according to the registration reply message. The format of the registration acknowledgement extension option is shown in Figure 4. Some parameters in the registration acknowledgement extension option are as follows: Type: TBD; Length: 12. When the MN receives a PEBack for the first time, the MN must generate and store a cache entry (CoA, FHoAv6).

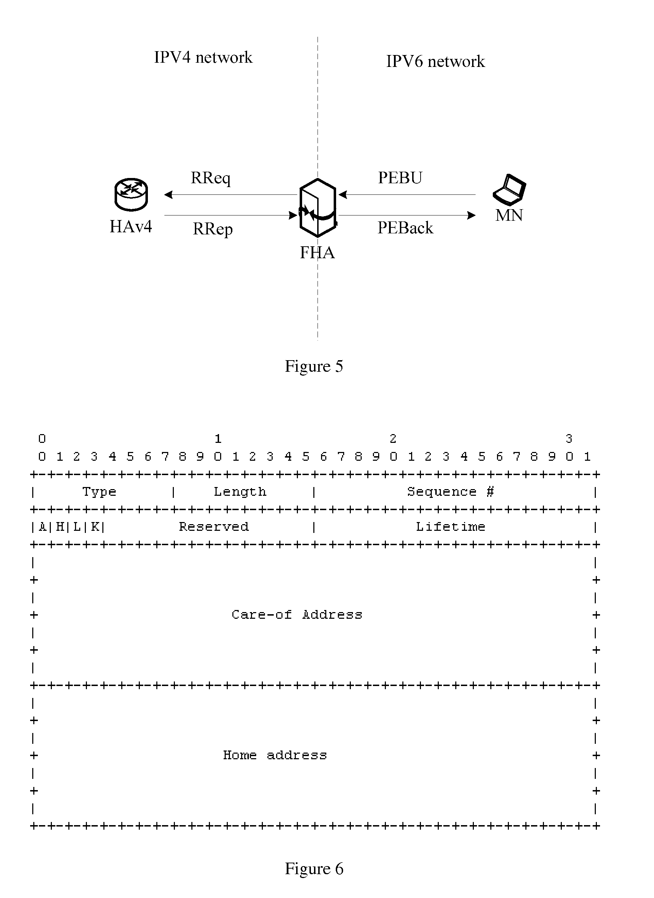

Figure 5 shows a procedure where PEBU and PEBack, registration message and registration reply messages are exchanged according to an embodiment of the invention.

When the MN returns from the IPv6 network to the IPv4 network, the MN must send a registration request extension message to the FHA. The registration request extension message includes a binding update extension option, where value of the parameter lifetime must be 0. The format of the binding update extension option is shown in Figure 6. Some parameters in the binding update extension option are as follows: Type: TBD; Length: 38.

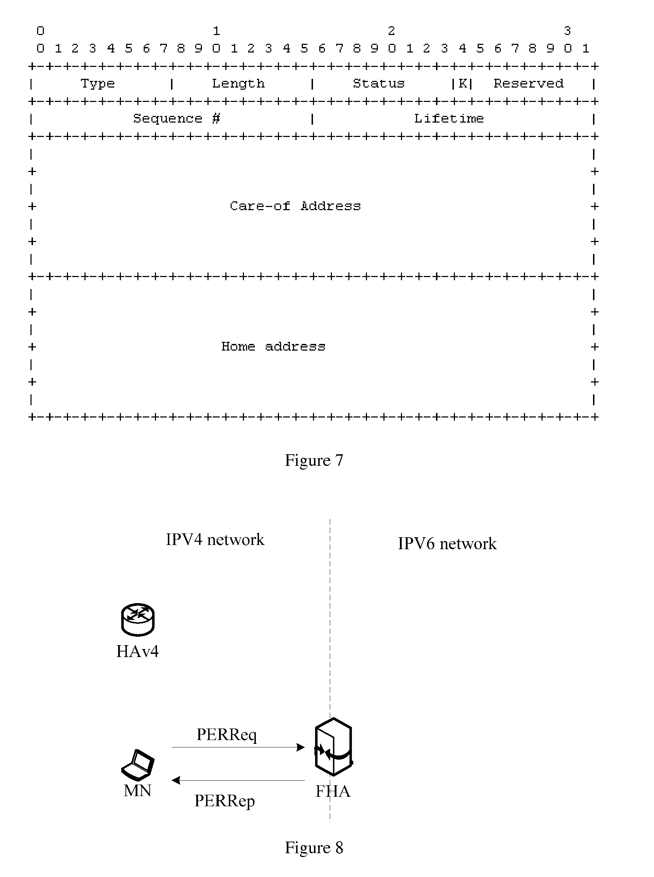

Upon reception of the registration request extension message, the FHA releases the tunnel between the MN and the FHA in the IPv6 network and must delete the cache entry corresponding to the MN registered in the IPv6 network and the entry corresponding to the FHA in the map (FHoAv4, FHoAv6). Then, the FHA sends a registration reply extension message to the MN. The message must include a binding acknowledgment extension option. The format of this extension option is shown in Figure 7. Some parameters of the binding acknowledgment extension option are as follows: Type: TBD; Length: 38.

A procedure for messages exchange between FHA and MN when the MN returns from the IPv6 network to the IPv4 network is shown in Figure 8.

Step 2-2: The MN communicates with the HA or CN in the IPv4 network via the FHA by means of the established tunnels.

When the MN roams to the IPv6 network, the FHA acts as an IPv6 temporary home agent (THAv6) of the MN. The MN and a CNv6 communicate over normal MIPv6. In this case, the THAv6 serves as the home agent of the MN in the IPv6 network. When the MN communicates with a CNv4, the MN sends data packets to the FHA via the established FHA-MN tunnel. The FHA sends the data packets to the HAv4 via the established FHA-HAv4 tunnel. The HAv4 then sends the data packets to the CNv4. Conversely, the CNv4 sends data packets to the HAv4. The HAv4 sends the data packets to the FHA via the established FHA-HAv4 tunnel. The FHA then sends the data packets to the MN via the established FHA-MN tunnel.

When the MN is in the IPv4 network, the MN communicates with a CNv4 over normal MIPv4. When the MN communicates with a CNv6, the MN sends data packets to the HAv4. The HAv4 sends the data packets to the FHA via the established FHA-HAv4 tunnel. The FHA then sends the data packets to the CNv6 via the established FHA-MN tunnel. The above procedure for transferring data packets requires that the FHA establishes a tunnel with each CNv6. Conversely, the CNv6 sends data packets to the FHA via a reverse tunnel. The FHA sends the data packets to the HAv4 via a tunnel. The HAv4 then sends the data packets to the MN.

In the above procedure, the operations requirements of MN, FHA and HA are as follows:

MN operations:

In an IPv6 network, when the MN moves from one link to another, or the registration will soon expire, the MN must send a PEBU to the FHA immediately. Value of the parameter lifetime in the registration request extension option in the PEBU must be smaller or equal to the lifetime value in the PEBU.

When the MN receives the PEBack returned by the FHA in response to the PEBU for the first time, the MN must generate a cache entry (CoA, FHoAv6).

When the MN returns from the IPv6 network to the IPv4 network, the MN must send a registration request extension message to the FHA. The registration request extension message includes a binding update extension option, where value of the parameter lifetime must be 0.

FHA operations:

Upon reception of the PEBU from the MN, the FHA must generate a registration message according to the registration request extension option in the PEBU. Meanwhile, the FHA must generate a cache entry (FHoAv6, CoA). Then, the FHA must send the generated registration message to the HA via the IPv4 network interface of the FHA. Afterwards, the FHA must generate a map (FHoAv4, FHoAv6) and another cache entry (HAA, FHoAv4).

Upon reception of the registration reply of the HA, the FHA must return a PEBack to the MN. The registration acknowledgement extension option in the PEBack is generated according to the registration reply.

Upon reception of a registration request extension message where the lifetime value in the binding update extension option is 0, the FHA must delete the corresponding cache entry and the corresponding entry in the map (FHoAv4, FHoAv6).

HA operations:

Upon reception of a registration message from the FHA for the first time, the HA must generate a cache entry (HoA, FHoAv4) or else update the registration cycle according to the registration message.

In response to the registration message, the HA must send a registration reply to the FHA.

Although the technical scheme of the present invention has been described through exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. An apparatus for a mobile node roaming in an Internet Protocol version 6 (IPv6) network, comprising:
a foreign home agent (FHA), which has been assigned both an IPv6 address and an Internet Protocol version 4 (IPv4) address, registers a tunnel respectively on an IPv6 network interface and an IPv4 network interface when a mobile node (MN) moves from an IPv4 network to the IPv6 network.

2. The apparatus of claim 1, wherein the FHA comprises:
a registration setup module, adapted to register the tunnel between the FHA and the MN on the IPv6 network interface and generate and store a map between an IPv6 foreign home address (FHoAv6) obtained by the MN from the FHA and a care of address (CoA) of the MN in the IPv6 network when the MN moves from the IPv4 network to the IPv6 network; register the tunnel between the FHA and the IPv4 home agent (HAv4) of the MN on the IPv4 network interface and generate and store a map between an IPv4 foreign home address (FHoAv4) obtained by the MN from the FHA and an address of the HAv4 (HAA); and
a route management module, adapted to transfer data packets between the MN and the HAv4 via the tunnels registered by the registration setup module according to map information stored by the registration setup module, when the MN moves from the IPv4 network to the IPv6 network.

3. The apparatus of claim 2, wherein the FHA further comprises:
a registration release module, adapted to release the tunnel between the FHA and the MN registered on the IPv6 network interface by the registration setup module, and delete the stored map between the FHoAv6 obtained by the MN from the FHA and the CoA.

4. The apparatus of claim 1, 2 or 3, wherein the FHA is placed at a boundary of the IPv6 network and the IPv4 network, or a hybrid network of IPv6 and IPv4.

5. A method for a mobile node roaming in an Internet Protocol version 6 (IPv6) network, comprising:
sending, by the mobile node (MN), a Binding Update (BU) message that carries an IPv4 registration option of the MN when the MN moves from an Internet Protocol version 4 (IPv4) network to the IPv6 network.

6. The method of claim 5, further comprising:
by a foreign home agent (FHA) that has been assigned both an IPv6 address and an IPv4 address in the network, receiving the BU message and registering a tunnel respectively on an IPv6 network interface and an IPv4 network interface according to the BU message.

7. The method of claim 6, further comprising:
after moving from the IPv4 network to the IPv6 network, obtaining, by the MN, a care of address (CoA) and sending a Proxy Extension Binding Update (PEBU) message to the FHA, wherein the source address of the PEBU message is the CoA and the destination address of the PEBU message is an IPv6 foreign home address (FHoAv6) obtained by the MN from the FHA, and wherein the PEBU message carries a registration request extension option comprising registration information of the MN in the IPv4 network; setting up a tunnel between the MN and the IPv6 network interface of the FHA (FHAv6); and
upon the PEBU, generating a registration message, by the FHA, and sending the registration message to the IPv4 home agent (HAv4) of the MN, wherein the source address of the registration message is an IPv4 foreign home address (FHoAv4) obtained by the MN from the FHA and the destination address of the registration message is the home agent address (HAA) of the MN, and wherein the registration message carries a binding update extension option comprising registration information of the MN in the IPv4 network; and setting up a tunnel between the HAv4 and the FHA.

8. The method of claim 7, wherein:
value of lifetime in the registration request extension option carried in the PEBU message is smaller than or equal to that of lifetime in the PEBU message; and
value of lifetime in the binding update extension option carried in the registration message is smaller than or equal to that of lifetime in the registration message.

9. The method of claim 7, further comprising:
generating, by the FHA, a map between the FHoAv6 and the CoA, a map between the HAA and the FHoAv4, and a map between the FHoAv4 and the FHoAv6.

10. The method of claim 7, further comprising:
upon reception of the registration message, generating and storing, by the HAv4, a map between the home address (HoA) of the MN and the FHoAv4 and returning a registration reply to the FHA; and
upon reception of the registration reply, sending, by the FHA, a Proxy Extension Binding Acknowledgement (PEBack) to the MN, which comprises a registration acknowledgement extension option obtained according to the PEBack, upon reception of the PEBack, generating and storing, and by the MN, a map between the CoA and the FHoAv6.

11. The method of claim 9, further comprising:
sending a registration request extension message, by the MN, after returning from the IPv6 network to the IPv4 network, to the FHA, wherein the registration request extension message comprises a binding update extension option whose lifetime value is 0;
upon reception of the registration request extension message, releasing, by the FHA, the tunnel between the MN and the FHA, deleting the stored map between the FHoAv6 and the CoA and an entry corresponding to the FHA in the map between the FHoAv4 and the FHoAv6, and returning a registration acknowledgement extension message to the MN.

12. The method of any of claims 6-11, further comprising:
sending, by the MN, data packets to the FHA via the established tunnel between the FHA and the MN, sending, by the FHA, the data packets to the HAv4 via the established tunnel between the FHA and the HAv4, and sending, by the HAv4, the data packets to an IPv4 communication node (CNv4), when the MN moves from the IPv4 network to the IPv6 network; and
sending, by the CNv4, data packets to the HAv4, sending, by the HAv4, the data packets to the FHA via the established tunnel between the FHA and the HAv4, and sending, by the FHA, the data packets to the MN via the established tunnel between the FHA and the MN.
